# EUROPÄISCHE PATENTSCHRIFT

(11) **EP 1 531 538 B1**
(45) Veröffentlichungstag und Bekanntmachung des Hinweises auf die Patenterteilung: **26.03.2014**
(21) Anmeldenummer: 04026837.7
(22) Anmeldetag: 11.11.2004
(51) Int. Cl.: H02M 1/12, H02M 3/158

(54) **Verfahren zur Steuerung eines Hochsetzstellers und mehrkanaliger Hochsetzsteller sowie Verwendung eines solchen**
Method of controlling a boost converter and multiphase boost converter and use of the same
Procédé de commande d'un convertisseur élévateur, convertisseur élévateur multiphasé et son utilisation

(30) Priorität: 11.11.2003 DE 10352604; 11.03.2004 DE 102004011801
(43) Veröffentlichungstag der Anmeldung: 18.05.2005
(73) Patentinhaber: Leopold Kostal GmbH & Co. KG, 58507 Lüdenscheid (DE)
(72) Erfinder: Bartling, Ralf, 58239 Schwerte (DE)
(74) Vertreter: Kerkmann, Detlef

(56) Entgegenhaltungen:
- EP-A- 1 248 352
- US-B1- 6 462 525
- IRVING B T ET AL: "A comparative study of soft-switched CCM boost rectifiers and interleaved variable-frequency DCM boost rectifier" APPLIED POWER ELECTRONICS CONFERENCE AND EXPOSITION, 2000. APEC 2000. FIFTEENTH ANNUAL IEEE NEW ORLEANS, LA, USA 6-10 FEB. 2000, PISCATAWAY, NJ, USA,IEEE, US, Bd. 1, 6. Februar 2000 (2000-02-06), Seiten 171-177, XP010371748 ISBN: 978-0-7803-5864-5

## Beschreibung

Die vorliegende Erfindung betrifft ein Verfahren zur Steuerung eines Hochsetzstellers, einen mehrkanaligen Hochsetzsteller sowie die Verwendung eines solchen zur Leistungsfaktorkorrektur der Leistungsaufnahme einer elektrischen Last aus dem Stromnetz.

Eine Vielzahl elektrischer Geräte wie z.B. Netzgeräte, Schaltnetzteile, Frequenzumrichter oder elektrisch kommutierte Antriebe entnehmen dem Wechselstromnetz einen Strom, der nicht sinusförmig ist. Dadurch ergibt sich zum einen ein Oberschwingungsanteil des dem Netz entnommenen Stromes, zum anderen ist aber auch die maximal mögliche Leistungsaufnahme des Gerätes durch einen relativ hohen Blindwirkungsanteil begrenzt.

Zur Vermeidung dieser Nachteile werden sogenannte Leistungsfaktorkorrekturschaltungen eingesetzt. Es handelt sich dabei im Prinzip um im Stromweg einer Last liegende Hochsetzsteller, die mit einer deutlich höheren Frequenz als der Netzfrequenz betrieben werden, und bei denen der Netzaufnahmestrom mit Hilfe eines geschlossenen Stromregelkreises sinusförmig geregelt wird.

Je größer dabei die von dem Gerät aufzunehmende Leistung ist, desto größer müssen auch die entsprechenden Bauteile des Hochsetzstellers bemessen sein, wobei insbesondere die erforderliche Größe der Speicherdrossel etwa bei tragbaren Geräten wie z.B. elektrischen Handwerkzeugen kritisch werden und deshalb Kompromisse erforderlich machen kann.

Die EP 951 133 A2 offenbart eine Möglichkeit diese Problematik zu umgehen, indem man den Strompfad in mehrere parallele Zweige aufteilt, von denen jeder nur einen Teil des Stromes zu tragen hat, und somit die Bauteile wieder entsprechend kleiner dimensioniert werden können. Der Stromfluss in den einzelnen Zweigen wird dabei von einer Steuereinheit so geregelt, dass sich in der Summe der in den einzelnen Zweigen fließenden Ströme wieder ein annähernd sinusförmiger Verlauf des Netzaufnahmestroms ergibt.

Diese Art der Stromregelung ist jedoch schwer zu realisieren, zumindest technisch aufwendig.

Der Fachaufsatz "A Comparative Study of Soft-Switched CCM Boost Rectifiers and Interleaved Variable-Frequency DCM Boost Rectifiers" von Brian T. Irving et al. (IEEE US, Bd. 1, 6. Februar 2000, Seiten 171-177; ISBN: 978-0-7803-5864-5) offenbart einen mehrkanaligen Hochsetzsteller gemäß dem Oberbegriff des Patentanspruchs 6 sowie ein Verfahren zur Steuerung eines solchen Hochsetzstellers gemäß dem Oberbegriff des Patentanspruchs 1, bei dem ein Stromkanal als Master-Kanal betrieben wird, der seinen zyklischen Betrieb eigenständig aufrecht erhält, und ein zweiter Stromkanal als Slave-Kanal betrieben wird. Die Startsignale für den Slave-Kanal werden von einer zentralen Steuereinheit in Abhängigkeit eines Ausgangssignals des Master-Kanals erzeugt. Bei dieser zentralen Steuereinheit, die hier als "interleaving circuit" bezeichnet wird, handelt es sich um eine relativ aufwendige analoge Schaltung, die ausschließlich zur Bestimmung der Periodendauer des Master-Kanals und der daraus abgeleiteten Startzeitpunkte des Slave-Kanals vorgesehen ist. Die Einschaltdauern des Master-Kanals und des Slave-Kanals werden dabei von diesen autark bestimmt, wobei die Einschaltdauer des Slave-Kanals und die Einschaltdauer des Master-Kanals notwendigerweise unterschiedlich sind.

Die US-Patentschrift 6,462,525 zeigt einen mehrkanaligen Spannungsregler, bei dem zur Erhöhung der Effizienz bei einer Last, die geringer als die maximal mögliche, mit dem Spannungsregler zu betreibende Last ist, zumindest ein Kanal abgeschaltet werden kann.

In der EP 1 248 352 A2 ist ein Verfahren sowie eine Schaltung zum Synchronisieren von Schaltreglern mit nicht-konstanter Frequenz durch eine Phasenregelschleife offenbart. Zur Beaufschlagung der Leistungsschalter der Stromkanäle mit entsprechenden Ansteuersignalen werden in D3 One-Shot Timerbausteine verwendet.

Der erfindungsgemäße mehrkanalige Hochsetzsteller mit den Merkmalen des Patentanspruchs 6 sowie das erfindungsgemäße Verfahren zur Steuerung eines solchen Hochsetzstellers mit den Merkmalen des Patentanspruchs 1 ermöglichen es insbesondere, auf einfache Weise die Ausgangsspannung des Hochsetzstellers unabhängig sowohl von der Last als auch von der Netz-Eingangsspannung konstant zu halten.

Weitere besonders günstige Ausgestaltungen des erfindungsgemäßen Verfahrens sowie des mehrkanaligen Hochsetzstellers sind in den jeweiligen Unteransprüchen angegeben und werden anhand des in der Zeichnung dargestellten Ausführungsbeispiels näher erläutert.

Dabei zeigen
- **Fig. 1:**: Ein Blockschaltbild einer Ansteuerung für einen erfindungsgemäßen 4-kanaligen Hochsetzsteller
- **Fig. 2:**: Ein Zeitdiagramm beim Ablauf eines erfindungsgemäßen Verfahrens
- **Fig. 3:**: Die Aufteilung einer Netzspannungsperiode in Bereiche mit einer unterschiedlichen Anzahl aktiver Kanäle

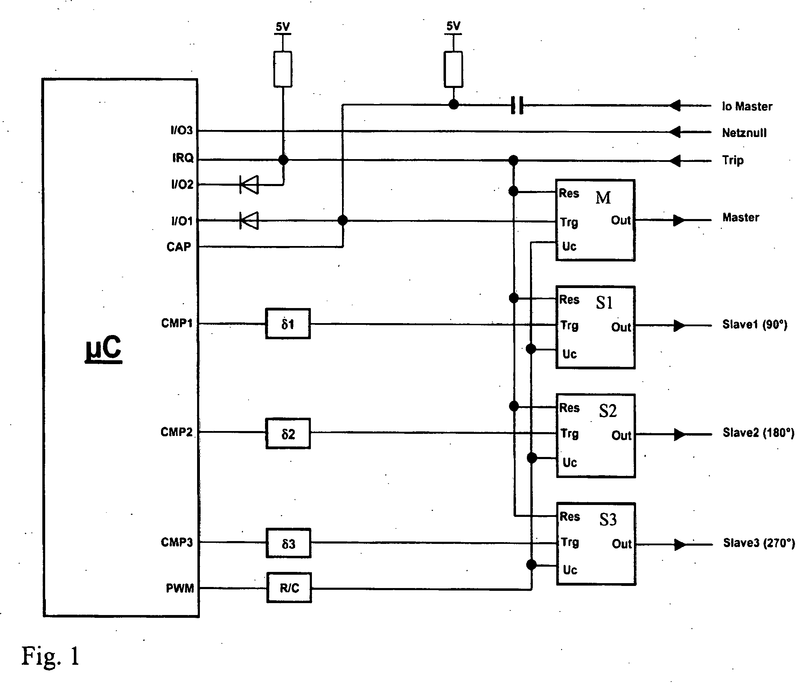

Wie aus Fig. 1 zu sehen, ist als zentrale Steuereinheit für einen als Leistungsfaktorkorrekturschaltung eingesetzten 4-kanaligen Hochsetzsteller ein Mikrocontroller µC vorgesehen, wobei es sich auch um einen digitalen Signal-Prozessor (DSP) handeln kann. Die vier in der Darstellung als "Master", "Slave1", "Slave2" und "Slave3" bezeichneten Stromkanäle sind prinzipiell gleich aufgebaut und umfassen in bekannter Anordnung jeweils eine Speicherdrossel, einen Leistungsschalter und eine Längsdiode, wobei die Eingänge der Speicherdrosseln an einem gemeinsamen Schaltungsknoten mit dem Plus-Ausgang eines Brückengleichrichters verbunden sind und die Ausgänge der Dioden an einem Schaltungsknoten mit einem gemeinsamen Glättungskondensator verbunden sind. Die Leistungsschalter sind in jedem Kanal jeweils an einem Punkt zwischen Speicherdrossel und Diode nach Masse (Minus-Ausgang des Brückengleichrichters) schaltend angeordnet. Einer der Stromkanäle wird in dieser Konfiguration als sog. Master-Kanal betrieben, der nach einmaligem Anstoßen des Prozesses autark weiterläuft, während die drei anderen Stromkanäle als sog. Slave-Kanäle in Abhängigkeit vom Betrieb des Master-Kanals über den Mikrocontroller µC gesteuert werden. Zur Beaufschlagung der Leistungsschalter der vier Kanäle mit entsprechenden Ansteuersignalen sind vier Monoflop-Bausteine M, S1, S2 und S3 für den einen Master- und die drei Slave-Kanäle vorhanden, die jeweils ein High- bzw. Low-Signal ausgeben, wenn der entsprechende Leistungsschalter für den jeweiligen Stromkanal schalten oder sperren soll. Gesteuert werden die Monoflop-Bausteine M, S1, S2 und S3 durch den Mikrocontroller µC, der einerseits über seinen Ausgang PWM ein pulsweitenmoduliertes Signal abgibt, welches die Einschaltzeit Ton der Leistungsschalter bestimmt und von einem R-C-Glied R/C in eine Steuerspannung umgewandelt wird, die den Monoflop-Bausteinen M, S1, S2 und S3 über entsprechende Eingänge Uc zugeführt wird, und andererseits über Ausgänge I/O1, CMP1, CMP2 und CMP3 Einschaltsignale für den jeweiligen Einschaltzeitpunkt der einzelnen Kanäle abgibt. Dabei werden über die CMP-Ausgänge Stufensignale, d.h. Wechsel von High nach Low bzw. umgekehrt abgegeben, die über jeweils ein Differenzier-Glied δ1, δ2 und δ3 in Impulssignale umgesetzt werden, während der I/O1-Port direkt ein Impulssignal erzeugt. Die Impulssignale für die jeweiligen Einschaltzeitpunkte der einzelnen Kanäle werden den Monoflop-Bausteinen M, S1, S2 und S3 über ihren jeweiligen Trigger-Eingang Trg zugeführt. Das Einschaltsignal für den Master-Kanal wird dabei nur einmalig zum Start vom Mikrocontroller µC über den I/O1-Port abgegeben. Danach erhält der dem Master-Kanal zugeführte Monoflop-Baustein M sein Einschaltsignal von einem Detektor-Element, welches im Master-Stromkanal z.B. etwa als zusätzliche Wicklung auf der Drosselspule mit einem nachgeschalteten Komparator angeordnet und zur Bestimmung eines Nullwertes des in diesem fließenden Stromes vorgesehen ist. In dem Moment, in dem der Strom im Master-Stromkanal zu Null wird, gibt dieses Detektor-Element ein Stromnullsignal lo in Form eines Impulssignals ab, welches dem Monoflop-Baustein M über seinen Trigger-Eingang Trg als erneutes Startsignal zugeführt wird, so daß sich der Betrieb des Master-Kanals selbst aufrecht erhält. Diese Art des Betriebes, bei der bei Abfallen des Stromes auf Null ein erneuter Zyklus gestartet wird, ist bei einkanaligen Leistungsfaktorkorrekturschaltungen bekannt und wird dort als "diskontinuierlicher Modus" bezeichnet. Das Stromnullsignal Io des Detektor-Elements wird außerdem dem Mikrocontroller über einen Eingang CAP zugeführt. Damit liegt im Mikrocontroller µC eine Information über den Endzeitpunkt eines abgelaufenen Master-Kanal-Zyklus vor, der gleichzeitig auch den Startzeitpunkt des darauffolgenden Master-Kanal-Zyklus markiert, und mit zwei solcher Zeitpunkte auch eine Information über die Zykluszeit-Länge bzw. Periodendauer. Aus dieser bekannten Periodendauer kann der Mikrocontroller µC nun die Startzeitpunkte für die Slave-Kanäle vorausberechnen, wobei im Falle der insgesamt vier Kanäle die Slave-Kanäle mit einer Verzögerung von jeweils ¼, ½ und ¾ der gesamten Periodendauer nach dem Master-Kanal gestartet werden. Bei einer anderen Anzahl von Kanälen würde die Verzögerung in entsprechend gleichmäßigen Bruchteilen der Periodendauer angepaßt.

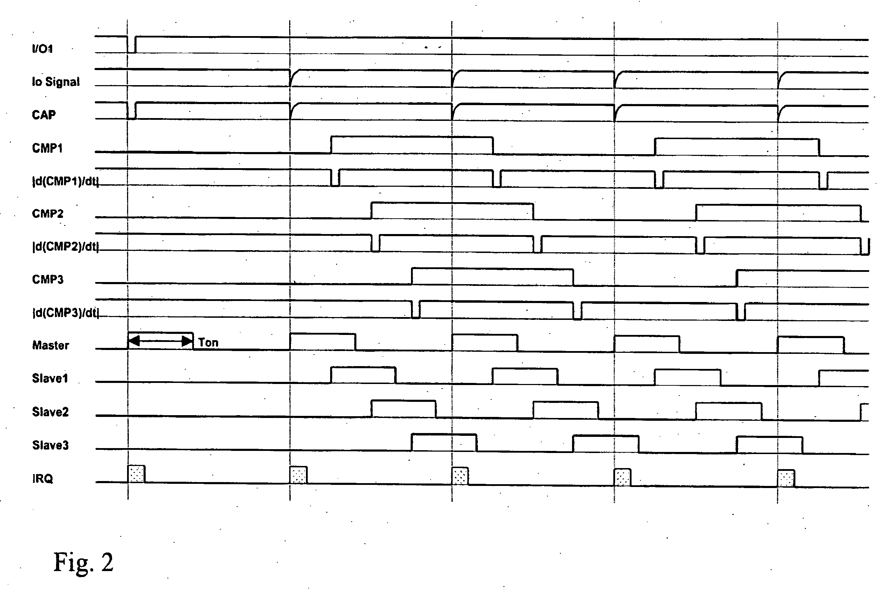

Der Ablauf der ersten Zyklen des erfindungsgemäßen Verfahrens ist aus dem in Fig. 2 dargestellten Zeitdiagramm ersichtlich, das die an den unterschiedlichen Ein- und Ausgängen anliegenden Signale als Funktion der Zeit zeigt. Mit einem Impulssignal über seinen Ausgang I/O1 (erste Zeile) startet der Mikrocontroller µC den ersten Master-Zyklus. Die weiteren Master-Zyklen werden jeweils durch das Stromnullsignal des Detektor-Elements (zweite Zeile, "Io Signal") gestartet. Das Ausgangssignal des Monoflop-Bausteins M und damit die Einschaltzeit des Leistungsschalters des Master-Kanals ist in der Zeile "Master" wiedergegeben. Das lo-Signal liegt auch am CAP-Eingang des Mikrocontrollers (dritte Zeile) an, der damit die Periodendauer und daraus die Startzeitpunkte für die Slave-Kanäle berechnet. Die Startsignale für die Slave-Kanäle werden mit einem Phasenversatz von 90°, 180° und 270°, bzw. einer Verzögerung von ¼, ½ und ¾ der Periodendauer gegenüber dem Startzeitpunkt des Master-Kanals als Stufensignale über die Ausgänge CMP1, CMP2 und CMP3 ausgegeben. Diese Stufensignale werden in die in den jeweils gleich unterhalb der jeweils zugehörigen Zeilen CMP1, CMP2 und CMP3 angeordneten Zeilen dCMP1, dCMP2 und dCMP3 gezeigten Impulssignale umgewandelt und so den Trg-Eingängen der Monoflop-Bausteine S1, S2 und S3 zugeführt. Die Ausgangssignale der Monoflop-Bausteine S1, S2 und S3 und damit die Einschaltzeiten der Leistungsschalter der jeweiligen Slave-Kanäle sind in den Zeilen "Slave1 ", "Slave2" und "Slave3" wiedergegeben. In welchem Maße sich die Einschaltzeiten der einzelnen Kanäle dabei überlappen, hängt von dem Verhältnis der jeweiligen Einschaltzeit Ton zu der gesamten Periodendauer T ab, die beide wiederum sowohl von der abgegebenen Leistung als auch von der anliegenden Eingangsspannung abhängen. Die Einschaltdauer Ton wird vom Mikrocontroller µC so gesteuert, daß die Ausgangsspannung unabhängig sowohl von der Last als auch von der Netz-Eingangsspannung konstant bleibt.

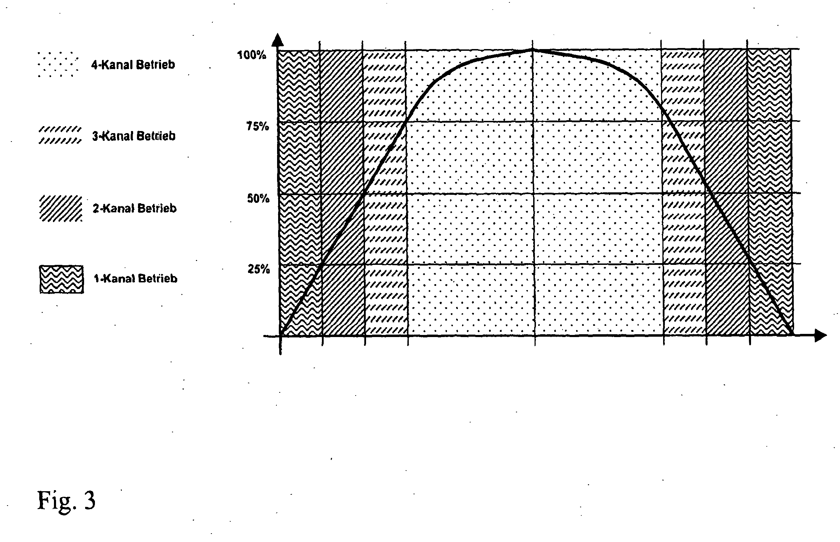

Wie bereits zuvor erwähnt ist die Anzahl der Kanäle der Leistungsfaktorkorrekturschaltung praktisch beliebig wählbar und wird sich daher in der Regel an der maximal bereitzustellenden Leistung orientieren, wobei jedoch auch zu berücksichtigen ist, daß sowohl der schaltungstechnische Aufwand als auch die erforderliche Rechenleistung des Mikrocontrollers mit der Anzahl der Kanäle steigt. Bei einer mit z.B. vier physisch vorhandenen Strom-Kanälen versehenen Vorrichtung, wie sie oben beschrieben wurde, ist aber auch ein Betrieb mit nur einem Teil der vorhandenen, also nur ein, zwei oder drei Kanälen möglich, wobei dann jeweils die Periodendauer T sowie die Einschaltzeit Ton und die Phasenverschiebungen der Kanäle gegeneinander entsprechend angepaßt werden. Dies macht sich eine vorteilhafte Weiterbildung der Erfindung zunutze, indem die Zahl der benutzten Kanäle an die zu einem jeweiligen Zeitpunkt gegebenen Anforderungen angepaßt wird. Die Reduzierung der Anzahl der verwendeten Kanäle kann dabei sowohl im Bereich der Teillast, d.h wenn über längere Zeit nur eine geringere Leistung abgerufen wird, als auch bei Vollast im Bereich der niedrigen Netzspannungswerte während einer Netzspannungsperiode erfolgen. In Fig. 3 ist eine Möglichkeit der Anpassung der Anzahl der verwendeten Kanäle innerhalb einer (halben) Netzspannungsperiode dargestellt, bei der im Bereich von 0% bis 25% der maximalen Netzspannung nur ein Kanal betrieben wird, während in Bereichen von 25% bis 50% zwei, von 50% bis 75% drei und über 75% alle vier Kanäle betrieben werden. Ziel dieser Weiterbildung insbesondere des erfindungsgemäßen Verfahrens ist es, eine Reduzierung der Belastung des Mikrocontrollers µC zu erreichen. Während nämlich bei konstanter Last die Einschaltzeit Ton der Leistungsschalter über die Netzspannungsperiode konstant bleibt, wird die Periodendauer bei niedrigen Netzspannungswerten während einer Netzspannungsperiode immer geringer. Dies bedeutet aber, daß die Anzahl der in gleichen Zeiträumen durch den Mikrocontroller zu bewältigenden Rechenvorgänge ansteigt, da für jeden Zyklus erneut die aktuelle Periodendauer sowie die Einschaltzeitpunkte der Slave-Kanäle berechnet werden müssen. Mit der Reduzierung der Anzahl der verwendeten Kanäle wird die pro Kanal abgeforderte Leistung erhöht, dadurch die Periodendauer verlängert, und im Resultat durch die Verlängerung der Periodendauer und die geringere Anzahl der zu berechnenden Kanäle der Vorteil der Reduzierung der Rechenlast des Mikrocontrollers erreicht.

## Patentansprüche

1. Verfahren zur Steuerung eines Hochsetzstellers, wobei der Stromweg zwischen einem zur Gleichrichtung der Netzwechselspannung vorgesehenen Gleichrichter und der Last in zumindest zwei parallele Stromkanäle aufgeteilt ist, die mit zueinander phasenversetzten Startsignalen (Master, Slave 1, Slave 2, Slave 3) angesteuert werden, wobei einer der Stromkanäle als Master-Kanal betrieben wird, der seinen zyklischen Betrieb eigenständig aufrecht erhält, und wobei der zumindest eine weitere Kanal als Slave-Kanal betrieben wird, dessen Startsignale (Slave 1, Slave 2, Slave 3) von einer zentralen Steuereinheit (µC) in Abhängigkeit eines Ausgangssignals des Master-Kanals erzeugt werden **dadurch gekennzeichnet, dass** die Einschaltdauern (Ton) der Leistungsschalter des Master-Kanals und des zumindest einen Slave-Kanals identisch sind und von der zentralen Steuereinheit (µC) bestimmt werden.

2. Verfahren nach Anspruch 1, **dadurch gekennzeichnet, dass** der Strom im Master-Kanal bei jeder Ansteuerung von Null beginnend auf einen Maximalwert ansteigt und dann wieder auf Null abfällt, wobei zu dem Zeitpunkt, an dem der in ihm fließende Strom zu Null wird, durch ein zugeordnetes Detektor-Element ein Stromnullsignal (lo) abgegeben wird, das einerseits als Startsignal zur direkten erneuten Ansteuerung des Master-Kanals verwendet wird, und andererseits der zentralen Steuereinheit (µC) zugeführt wird.

3. Verfahren nach Anspruch 2, **dadurch gekennzeichnet, dass** die zentrale Steuereinheit (µC) aus den Eintreffzeitpunkten des Stromnullsignals (lo) die Periodendauer (T) und die Startzeitpunkte für die Slave-Kanäle vorausberechnet.

4. Verfahren nach einem der Ansprüche 1 bis 3, **dadurch gekennzeichnet, dass** N >= 2 Stromkanäle verwendet werden, die jeweils mit zueinander um 360°/N phasenversetzten Startsignalen angesteuert werden.

5. Verfahren nach einem der Ansprüche 1 bis 4, **dadurch gekennzeichnet, dass** die Anzahl der verwendeten Stromkanäle in Abhängigkeit der momentanen Leistungsaufnahme und/oder der momentanen Netzspannung geringer als die Anzahl der insgesamt vorhandenen Stromkanäle gewählt wird.

6. Mehrkanaliger Hochsetzsteller, bei dem der Stromweg zwischen einem zur Gleichrichtung der Netzwechselspannung vorgesehenen Gleichrichter und der Last in zumindest zwei parallele Stromkanäle aufgeteilt ist, deren Stromfluss durch ansteuerbare Leistungsschalter unabhängig voneinander beeinflussbar ist, wobei einer der Stromkanäle als Master-Kanal mit einem Detektor-Element zur Abgabe eines Stromnullsignals (lo) versehen ist, wobei eine zentrale Steuereinheit (µC) zur Ansteuerung der Schalter vorgesehen ist, und wobei zumindest ein weiterer Kanal als Slave-Kanal mit einem Signalausgang (CMP1) der Steuereinheit (µC) verbunden ist, **dadurch gekennzeichnet, dass** das Stromnullsignal (lo) des Master-Kanals einerseits der zentralen Steuereinheit (µC) und andererseits dem ansteuerbaren Leistungsschalter des Master-Kanal als erneutes Startsignal zugeführt ist, und dass zur Steuerung der identischen Einschaltdauern (Ton) der Leistungsschalter ein Ausgang (PWM) der zentralen Steuereinheit (µC) mittelbar mit den Leistungsschaltern verbunden ist.

7. Hochsetzsteller nach Anspruch 6, **dadurch gekennzeichnet, dass** zur Beaufschlagung der Leistungsschalter der Stromkanäle mit entsprechenden Ansteuersignalen Monoflop-Bausteine (M, S1, S2, S3) vorhanden sind , die jeweils ein High- bzw. Low-Signal ausgeben, wenn der entsprechende Leistungsschalter für den jeweiligen Stromkanal schalten oder sperren soll.

8. Hochsetzsteller nach Anspruch 7, **dadurch gekennzeichnet, dass** zur Steuerung der Einschaltzeit (Ton) der Leistungsschalter, ein Ausgang (PWM) der zentralen Steuereinheit (µC) über R-C-Glieder (R/C) mit Steuereingängen (Uc) der Monoflop-Bausteine (M, S1, S2, S3) verbunden ist, und zur Steuerung der Einschaltzeitpunkte der Leistungsschalter weitere Ausgänge (I/O1,CMP1,CMP2, CMP3) jeweils mit Trigger-Eingängen (Trg) ) der Monoflop-Bausteine (M, S1, S2, S3) verbunden sind.

9. Hochsetzsteller nach Anspruch 8, **dadurch gekennzeichnet, dass** zur Umsetzung der über die weiteren Ausgänge (CMP1,CMP2, CMP3) der zentralen Steuereinheit (µC) abgegebenen Stufensignale in Impulssignale für die Trigger-Eingänge (Trg) der Monoflop-Bausteine (S1, S2, S3) der Slave-Kanäle jeweils Differenzier-Glieder (δ1, δ2, δ3) zwischen diesen Aus- und Eingängen vorhanden sind.

10. Hochsetzsteller nach einem der Ansprüche 6 bis 9, **dadurch gekennzeichnet, dass** die zentrale Steuereinheit (µC) durch einen Mikrocontroller gebildet ist.

11. Verwendung eines Hochsetzstellers nach einem der Ansprüche 6 bis 10 zur Leistungsfaktorkorrektur der Leistungsaufnahme einer elektrischen Last aus dem Stromnetz.

## Claims

1. System for controlling a boost converter with which the current path between a rectifier provided for rectifying the mains alternating voltage, and the load is divided into at least two parallel current channels which are triggered by start signals (Master, Slave 1, Slave 2, Slave 3) which are phase-shifted in relation to each other, for which purpose one of the current channels is operated as a master channel which independently maintains its cyclic operation, and with the at least one further channel being operated as a slave channel whose start signals (Slave 1, Slave 2, Slave 3) are generated by a central control unit (µC) in dependence on an output signal from the master channel, **characterised in that** the duty cycles (Ton) of the power switch of the master channel and of the at least one slave channel are identical and are determined by the central control unit (µC).

2. System according to Claim 1, **characterised in that** with each triggering the current in the master channel rises, beginning from zero, to a maximum value and then drops back to zero again, whereby, at the time at which the current flowing in it zeroes, a current zero signal (lo) is emitted by an allocated detector element which is implemented as the start signal for the direct re-triggering of the master channel on the one hand, and is fed to the central control unit (µC) on the other hand.

3. System according to Claim 2, **characterised in that** the central control unit (µC) anticipates the period (T) and the start times for the slave channels based on the receiving times of the current zero signal (lo).

4. System according to any of Claims 1 to 3, **characterised in that** N >= 2 current channels are implemented, each of which is triggered by start signals that are phase-shifted by 360°/N in relation to each other.

5. System according to any of Claims 1 to 4, **characterised in that** the number of implemented current channels is selected lower than the number of total current channels available, depending on the momentary power consumption and/or the momentary mains voltage.

6. Multi-channel boost converter with which the current path between a rectifier provided for rectifying the mains alternating voltage, and the load is divided into at least two parallel current channels whose current flow can be influenced independent of each other by triggerable power switches, with one of the current channels being a master channel provided with a detector element for emitting a current zero signal (lo), for which purpose a control unit (µC) is provided for triggering the switches, and with at least one further channel being connected as a slave channel to a signal output (CMP1) of the control unit (µC), **characterised in that** the current zero signal (lo) of the master channel is fed to the central control unit (µC) on the one hand, and as a repeat start signal to the triggerable power switch of the master channel on the other hand, and that an output (PWM) on the central control unit (µC) is directly connected to the power switches for the purpose of controlling the identical duty cycles (Ton) of the power switches.

7. Boost converter according to Claim 6, **characterised in that** each of the monoflop chips (M, S1, S2, S3) provided for impinging on the power switches of the current channels with relevant trigger signals, emits a high resp. low signal if the corresponding power switch for the individual current channel is to make or break.

8. Boost converter according to Claim 7, **characterised in that**, for the purpose of controlling the duty cycle (Ton) of the power switches, an output (PWM) on the central control unit (µC) is connected by way of RC circuits (R/C) to control inputs (Uc) of the monoflop chips (M, S1, S2, S3) and, for the purpose of controlling the switch-on times of the power switches, additional outputs (I/O1, CMP1, CMP2, CMP3) are each connected to trigger inputs (Trg) on the monoflop chips (M, S1, S2, S3).

9. Boost converter according to Claim 8, **characterised in that**, for the purpose of converting the stepped signals emitted by way of the additional outputs (CMP1, CMP2, CMP3) of the central control unit (µC) into pulse signals for the trigger inputs (Trg) of the monoflop chips (S1, S2, S3) of the slave channels, derivative elements (δ1, δ2, δ3) are provided between these outputs and inputs in each case.

10. Boost converter according to any of Claims 6 to 9, **characterised in that** the central control unit (µC) is formed by a microcontroller.

11. Implementation of a boost converter according to any of Claims 6 to 10 for the purpose of correcting the power factor of the power consumption of an electrical load from the mains power supply.

## Revendications

1. Procédé de commande d'un convertisseur élévateur, sachant que le trajet du courant, entre un redresseur, prévu pour le redressement de la tension de réseau alternative, et la charge, est divisé en au moins deux canaux de courant parallèles qui sont commandés par des signaux de départ (maître, esclave 1, esclave 2, esclave 3) qui sont déphasés l'un par rapport à l'autre, sachant que l'un des canaux de courant est exploité en tant que canal maître qui maintient de manière autonome son fonctionnement cyclique, et sachant que l'autre canal au moins prévu est exploité en tant que canal esclave, dont les signaux de départ (esclave 1, esclave 2, esclave 3) sont générés par une unité de commande centrale (µC) en fonction d'un signal de sortie du canal maître, **caractérisé en ce que** les temps de fermeture (Ton) du commutateur de puissance du canal maître et du canal esclave au moins prévu sont identiques et déterminés par l'unité de commande centrale (µC).

2. Procédé selon la revendication 1, **caractérisé en ce que**, lors de chaque commande, le courant monte, dans le canal maître, de zéro à la valeur maximale et retombe ensuite à zéro, sachant qu'au moment où le courant circulant dans ledit canal tombe à zéro, un signal de courant nul (lo) est lancé par un élément de détection y associé, lequel signal est, d'une part, utilisé en tant que signal de départ pour une nouvelle commande directe du canal maître, et est, d'autre part, conduit à l'unité de commande centrale (µC).

3. Procédé selon la revendication 2, **caractérisé en ce que** l'unité de commande centrale (µC) calcule d'avance la durée de période (T) et le moment de départ pour le canal maître à partir des moments d'arrivée du signal de courant nul (lo).

4. Procédé selon l'une des revendications 1 à 3, **caractérisé en ce que** sont utilisés N > = 2 canaux de courant qui sont commandés avec des signaux respectivement déphasés de 360 ° /N par rapport les uns aux autres.

5. Procédé selon l'une des revendications 1 à 4, **caractérisé en ce que** le nombre des canaux de courant utilisés est sélectionné en fonction de la consommation d'énergie momentanée et / ou de la tension de secteur momentanée inférieure au nombre total des canaux de courant existants.

6. Convertisseur élévateur à canaux multiples, dans lequel le trajet du courant entre un redresseur, prévu pour le redressement de la tension de réseau alternative, et la charge, est divisé en au moins deux canaux de courant parallèles, dont le flux peut être influencé indépendamment l'un de l'autre par des commutateurs de puissance pouvant être commandés, sachant que l'un des canaux de courant, exploité en tant que canal maître, est pourvu d'un élément de détection pour la délivrance d'un signal de courant nul (lo), sachant qu'une unité de commande centrale (µC) est prévue pour la commande dudit commutateur, et sachant qu'au moins un autre canal est relié, en tant que canal esclave, à un signal de sortie (CMP1) de l'unité de commande centrale (µC), **caractérisé en ce que** le signal de courant nul (lo) du canal maître est conduit, d'une part, à l'unité de commande centrale (µC) et, d'autre part, au commutateur de puissance commandé du canal maître, en tant que nouveau signal de départ, et que, pour la commande des durées de fermeture (Ton) identiques des commutateurs de puissance, une sortie (PWM) de l'unité de commande centrale (µC) est reliée indirectement audits commutateurs de puissance.

7. Convertisseur élévateur selon la revendication 6 **caractérisé en ce que**, pour soumettre les commutateurs de puissance des canaux de courant à des signaux de commande adéquats, sont prévues des bascules monostables (M, S1, S2, S3) qui délivrent chacune un signal haut ou respectivement bas, quand le commutateur de puissance respectif de chaque canal de courant doit connecter ou fermer.

8. Convertisseur élévateur selon la revendication 7, **caractérisé en ce que**, pour la commande de la durées de fermeture (Ton) des commutateurs de puissance, une sortie (PWM) de l'unité de commande centrale (µC) est reliée, par l'intermédiaire de circuits RC (R/C), à des entrées de commande (Uc) des bascules monostables (M, S1, S2, S3), et que, pour la commande des moments de fermeture des commutateurs de puissance, d'autres sorties (I/O1, CMP1, CMP2, CMP3) sont respectivement reliées à des entrées de déclenchement (Trg) des bascules monostables (M, S1, S2, S3).

9. Convertisseur élévateur selon la revendication 8, **caractérisé en ce que**, pour la conversion des signaux carrés, émis par l'intermédiaire des autres sorties (CMP1, CMP2, CMP3) de l'unité de commande centrale (µC), en signaux d'impulsions pour les entrées de déclenchement (Trg) des bascules monostables (S1, S2, S3) des canaux esclaves, des circuits de différentiation (δ1, δ2, δ3) sont respectivement prévues entre ces sorties et ces entrées.

10. Convertisseur élévateur selon l'une des revendications 6 à 9, **caractérisé en ce que** l'unité de commande centrale (µC) est formée par un microcontrôleur.

11. Utilisation d'un convertisseur élévateur selon l'une des revendications 6 à 10 pour corriger le facteur de puissance de l'énergie consommée par une charge électrique à partir du réseau.
